# EUROPEAN PATENT SPECIFICATION

(11) **EP 2 884 493 B1**
(45) Date of publication and mention of the grant of the patent: **27.02.2019**
(21) Application number: 13841451.1
(22) Date of filing: 29.05.2013
(51) Int. Cl.: G10L 25/78, G10L 25/69, G10L 25/60, H04L 29/06, H04M 3/22

(54) **METHOD AND APPARATUS FOR VOICE QUALITY MONITORING**
VERFAHREN UND VORRICHTUNG ZUR SPRACHQUALITÄTSÜBERWACHUNG
PROCÉDÉ ET APPAREIL DE SURVEILLANCE DE LA QUALITÉ DE VOIX

(30) Priority: 29.09.2012 CN 201210375963
(43) Date of publication of application: 17.06.2015
(73) Proprietor: Huawei Technologies Co., Ltd., Longgang District Shenzhen, Guangdong 518129 (CN)
(72) Inventor: XIAO, Wei, Shenzhen Guangdong 518129 (CN); MA, Fuwei, Shenzhen Guangdong 518129 (CN); XU, Lijing, Shenzhen Guangdong 518129 (CN)
(74) Representative: Pfenning, Meinig & Partner mbB
(86) International application number: PCT/CN2013/076364
(87) International publication number: WO 2014/048127

(56) References cited:
- WO-A1-02/065456
- CN-A- 1 538 667
- CN-A- 1 617 222
- CN-A- 101 645 271
- CN-A- 101 739 869
- US-A1- 2005 108 006
- US-A1- 2006 177 003
- US-A1- 2011 251 845
- DAMJAN VLAJ ET AL: "Influence of Hangover and Hangbefore Criteria on Automatic Speech Recognition", SYSTEMS, SIGNALS AND IMAGE PROCESSING, 2009. IWSSIP 2009. 16TH INTERNATIONAL CONFERENCE ON, IEEE, PISCATAWAY, NJ, USA, 18 June 2009 (2009-06-18), pages 1-4, XP031591693, ISBN: 978-1-4244-4530-1
- TELECOMMUNICATION STANDARIZATION SECTOR OF ITU: "ITU-T Recommendation P.563", INTERNET CITATION, 31 May 2004 (2004-05-31), pages 1-66, XP002622511, Retrieved from the Internet: URL:http://www.itu.int/ITU-T/index.html [retrieved on 2011-02-14]

## Description

### TECHNICAL FIELD

The present invention relates to the field of audio technologies, and more specifically, to a voice quality monitoring method and apparatus.

### BACKGROUND

In the research field of audio technologies, according to a requirement of a user or a technology supplier, quality of a related audio technology needs to be reflected, that is, voice quality monitoring needs to be performed to output a quality evaluation result.

However, a quality evaluation method or apparatus based on different technologies has the following problems. For example, there is a requirement for a length of a to-be-evaluated audio signal, for example, not exceeding 20 seconds, or a relatively long to-be-evaluated audio signal needs to be input at a time; therefore, hardware costs of an evaluation apparatus are increased. As a result, how to perform proper voice quality monitoring on a relatively long audio signal by using relatively low costs becomes a difficult problem.

US 2006/0177003A1 discloses that a temporal structure of the audio signal is parsed in order to differentiate an information-carrying section of the audio signal, and the generated test signal sections or fragments of the audio signal, respectively, which may have overlaps, are now supplied to a perception-based measurement method for determining the speech quality.

US 2005/01080006 A1 discloses a method of obtaining a PCM (Pulse Code Modulation) version of the signal and submitting the sampled signal, as successive groups or frames of samples, to a G.729 type coder in order to determine the groups or frames of samples, and the associated periods or sequences of the signal, comprising speech or voice activity.

WO 02/065456 A1 discloses a method and apparatus for determining an indication of perceptual speech quality for a voice signal. The apparatus may include a voice activity detector.

In view of this, embodiments of the present invention provide a voice quality monitoring method and apparatus as defined in the presently independent claims, so as to solve a difficult problem of how to perform proper voice quality monitoring on a relatively long audio signal by using relatively low costs.

According to a first aspect, a voice quality monitoring method is provided, including: capturing one or more voice signal parts from an input signal; performing voice segment segmentation on each voice signal part to obtain one or more voice segments; and performing a voice quality evaluation on the voice segment to obtain a quality evaluation result according to the voice quality evaluation.

The voice activity of each frame in the voice signal part is analyzed, consecutive active frames are used as one voice segment, and the voice signal part is segmented into the one or more voice segments; a duration T between status switching points of two adjacent voice segments is determined; and the duration T is compared with a threshold, and respective durations of the two voice segments are adjusted according to a comparison result to obtain voice segments whose duration is adjusted; and the performing a voice quality evaluation on the voice segment includes: performing the voice quality evaluation on the voice segments whose duration is adjusted.

When the duration T is greater than the threshold, an end position of a previous voice segment is extended backward 0.5 multiple of the threshold from an original status switching point, and a start position of a next voice segment is extended forward 0.5 multiple of the threshold from an original status switching point; or when the duration T is less than or equal to the threshold, an end position of a previous voice segment is extended 0.5*T duration from an original status switching point, and a start position of a next voice segment is extended forward 0.5*T duration from an original status switching point.

With reference to the foregoing first aspect, in a possible implementation example, segmentation is performed, in a unit of time, on the input signal to obtain multiple input signals of the unit of time; it is determined, by analyzing the input signals of the unit of time, whether the input signals of the unit of time are voice signals or non-voice signals; and an input signal, which is determined as a voice signal, of the unit time is used as the voice signal part.

With reference to the foregoing first aspect, in a possible implementation example, a non-intrusive quality evaluation is performed on the voice segment to obtain the quality evaluation result.

According to a second aspect, a voice quality monitoring apparatus is provided, including a classifying unit, a voice segment segmentation unit, and a quality evaluating unit, where a signal classifying unit is configured to capture one or more voice signal parts from an input signal and send the one or more voice signal parts to the voice segment segmentation unit; the voice segment segmentation unit is configured to perform voice segment segmentation on each voice signal part that is received from the signal classifying unit, to obtain one or more voice segments; and send the one or more voice segments to the quality evaluating unit; and the quality evaluating unit is configured to perform a voice quality evaluation on the voice segment that is received from the voice segment segmentation unit, to obtain a quality evaluation result according to the voice quality evaluation.

The voice segment segmentation unit includes a voice activity detecting unit and a duration determining unit, where the voice activity detecting unit is configured to analyze voice activity of each frame in the voice signal part, use consecutive active frames as one voice segment, and segment the voice signal part into the one or more voice segments; and the duration determining unit is configured to determine a duration T between status switching points of two adjacent voice segments; and compare the duration T with a threshold, adjust respective durations of the two voice segments according to a comparison result to obtain voice segments whose duration is adjusted, and send the voice segments whose duration is adjusted to the quality evaluating unit; and the quality evaluating unit is configured to perform the voice quality evaluation on the voice segments whose duration is adjusted by the duration determining unit, to obtain the quality evaluation result according to the voice quality evaluation.

The duration determining unit is specifically configured to: when the duration T is greater than the threshold, extend an end position of a previous voice segment backward 0.5 multiple of the threshold from an original status switching point, and extend a start position of a next voice segment forward 0.5 multiple of the threshold from an original status switching point; or when the duration T is less than or equal to the threshold, extend an end position of a previous voice segment 0.5*T duration from an original status switching point, and extend a start position of a next voice segment forward 0.5*T duration from an original status switching point.

With reference to the foregoing second aspect, in a possible implementation example, the signal classifying unit is specifically configured to: perform, in a unit of time, segmentation on the input signal to obtain multiple input signals of the unit of time; determine, by analyzing the input signals of the unit of time, whether the input signals of the unit of time are voice signals or non-voice signals; and use an input signal, which is determined as a voice signal, of the unit time as the voice signal part.

With reference to the foregoing second aspect, in a possible implementation example, the quality evaluating unit is configured to perform a non-intrusive quality evaluation on the voice segment to obtain the quality evaluation result.

According to the foregoing technical solutions, a voice signal part is captured from an input signal and voice segment segmentation is performed on the voice signal part; and a voice quality evaluation is performed by using a segmented voice segment as a unit. Because the segmented voice segment includes only a voice signal and is shorter than the input signal, proper voice quality monitoring can be performed on a relatively long audio signal by using relatively low costs, thereby obtaining a more accurate voice quality evaluation result.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a voice quality monitoring method according to Embodiment 1 of the present invention;
FIG. 2 is a schematic flowchart of a signal classification method according to Embodiment 2 of the present invention;
FIG. 3 is a schematic flowchart of a voice segment segmentation method according to Embodiment 3 of the present invention;
FIG. 4 is a schematic diagram of two voice segments according to Embodiment 4 of the present invention;
FIG. 5A and FIG. 5B are schematic diagrams of a voice segment segmentation algorithm according to Embodiment 5 of the present invention;
FIG. 6 is a schematic flowchart of a non-intrusive quality evaluation method according to Embodiment 6 of the present invention;
FIG. 7A and FIG. 7B are schematic block diagrams of a voice quality monitoring apparatus according to Embodiment 7 of the present invention; and
FIG. 8 is a schematic block diagram of a voice quality monitoring apparatus according to Embodiment 8 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention.

According to technologies involved in the embodiments of the present invention, subjective experience of a person is predicated mainly by analyzing a voice signal. In an application scenario, for example, an apparatus that uses the technical solutions in the embodiments of the present invention is embedded into a mobile phone or a mobile phone uses the technical solutions in the embodiments of the present invention to perform an evaluation on voice quality of a call. Specifically, for a mobile phone on one side of a call, after receiving a bitstream, the mobile phone may reconstruct a voice signal by decoding, and the voice signal is used as an input voice signal in the embodiments of the present invention, and quality of a received voice may be obtained, where the voice quality basically reflects quality of a voice that a user really hears. Therefore, by using the technical solutions involved in the embodiments of the present invention in a mobile phone, a subjective feeling of a person can be effectively evaluated.

In addition, generally, voice data needs to pass through several nodes in a network before the voice data is transmitted to a receiving party. Because of impact of some factors, after the voice data is transmitted over the network, voice quality probably degrades. Therefore, detection of voice quality of each node on a network side is very meaningful. However, many existing methods reflect more about quality of a transmission layer, which is not corresponding to a true feeling of a person in a one-to-one manner. Therefore, it may be considered that the technical solutions in the embodiments of the present invention are applied to each network node to synchronously perform a quality prediction, so as to find a quality bottleneck. For example, for any network result, a specific decoder is selected by analyzing a bitstream to perform local decoding on the bitstream to reconstruct a voice signal; voice quality of the node may be obtained by using the voice signal as an input voice signal in the embodiments of the present invention; and a node whose quality needs to be improved may be located by comparing voice quality of different nodes. Therefore, this application may play an important auxiliary role in operator's network optimization.

Signals transmitted over the network are of various types. For example, in a call, when the call is connected, there are a ring back tone (music) and a talking voice of a calling party; and when the calling party is silent, a mute voice with an uncertain length exists. A length of a call is unpredictable. For a fixed evaluation mode, a data volume that is used for quality evaluation processing is uncertain. In addition, because a person needs to pause or keep mute in a talking process, a general length is around 5s. A voice quality evaluation method should be that, when a speaker pauses, a quality evaluation result of a previous segment is immediately obtained.

The foregoing input to-be-evaluated audio signal may be real-time or may also non-real-time. However, when an input audio signal is relatively long, such as several minutes or even longer, the foregoing audio signal needs to be input at a time in the prior art, which increases hardware costs. In addition, a rapid evaluation cannot be implemented for a real-time application scenario, and for a non-real-time application scenario, only one evaluation result is given, which is not proper.

To solve the foregoing problems, the embodiments of the present invention provide a voice quality monitoring method and apparatus.

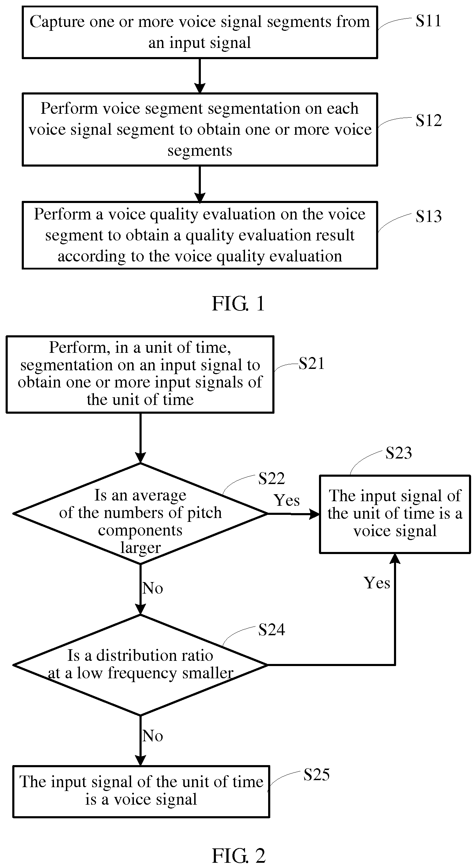

FIG. 1 is a schematic flowchart of a voice quality monitoring method according to Embodiment 1 of the present invention, where the method includes the following content.

S11. Capture one or more voice signal parts from an input signal.

The one or more voice signal parts are obtained from the input signal. Generally, a segment of audio signal as the input signal may include a voice signal and a non-voice signal. The non-voice signal, for example, is music. Optionally, the input signal is classified, so that a quality evaluation may be separately performed on the classified signal. The quality evaluation generally refers to rating a voice signal. Therefore, a useful voice signal may be captured in this step, and an irrelevant signal, such as music, is removed at the same time, thereby optimizing, that is, simplifying a to-be-evaluated data volume.

S12. Perform voice segment segmentation on each voice signal part to obtain one or more voice segments.

Each voice signal part is further segmented to obtain a voice segment (Voice segment). Optionally, the obtained voice segment is used as a unit of a more proper voice evaluation after a factor, such as a mute voice or a pause, is considered.

S 13. Perform a voice quality evaluation on the voice segment to obtain a quality evaluation result according to the voice quality evaluation.

Various non-intrusive voice quality evaluation methods may be used, which is more beneficial to perform voice quality monitoring on a real-time input signal in a network.

When input signals are consecutive, such as real-time signals in a network, uninterrupted network quality monitoring can be supported according to the technical solutions in the embodiments of the present invention.

According to the voice quality monitoring method provided in this embodiment of the present invention, a voice signal part is captured from an input signal and voice segment segmentation is performed on the voice signal part; and a voice quality evaluation is performed by using a segmented voice segment as a unit. Because the segmented voice segment includes only a voice signal and is shorter than the input signal, proper voice quality monitoring can be performed on a relatively long audio signal by using relatively low costs, thereby obtaining a more accurate voice quality evaluation result.

Optionally, as a different example, the performing voice segment segmentation on each voice signal part to obtain one or more voice segments includes: performing the voice segment segmentation on each voice signal part according to voice activity to obtain the one or more voice segments, where the voice activity indicates activity of each frame of voice signal in the voice signal part; or performing segmentation on each voice signal part to obtain the one or more voice segments, where a length of each voice segment is equal to a fixed duration. Optionally, as a different embodiment, the performing voice segment segmentation on each voice signal part to obtain one or more voice segments includes: analyzing voice activity of each frame in the voice signal part, using consecutive active frames as one voice segment, and segmenting the voice signal part into the one or more voice segments.

In one embodiment, the segmenting the voice signal part into the one or more voice segments according to voice activity specifically includes: analyzing voice activity of each frame in the voice signal part, using consecutive active frames as one voice segment, and segmenting the voice signal part into the one or more voice segments. In this embodiment, each voice segment includes only an active duration. All consecutive non-active frames are removed from the voice segment, and only an active frame is analyzed, so that a relatively accurate voice quality evaluation result can be obtained by using relatively low costs.

In another embodiment, after the voice signal part is segmented into the one or more voice segments according to voice activity, a duration T between status switching points of two adjacent voice segments is determined; the duration T is compared with a threshold, respective durations of the two voice segments are adjusted according to a comparison result, and voice segments whose duration is adjusted are used as voice segments on which the voice quality evaluation is performed. The performing a voice quality evaluation on the voice segment to obtain a quality evaluation result specifically includes: performing the voice quality evaluation on the voice segments whose duration is adjusted to obtain the quality evaluation result. In this embodiment, each voice segment includes an active duration that has a start and some non-active durations. By adding some mute voices to a voice segment, which is formed by an active frame, to form a voice segment, a voice quality evaluation can be more stable.

Optionally, as a different embodiment, the comparing the duration T with a threshold and adjusting respective durations of the two voice segments according to a comparison result to obtain voice segments whose duration is adjusted includes: when the duration T is greater than the threshold, extending an end position of a previous voice segment backward 0.5 multiple of the threshold from an original status switching point, and extending a start position of a next voice segment forward 0.5 multiple of the threshold from an original status switching point; or when the duration T is less than or equal to the threshold, extending an end position of a previous voice segment 0.5*T duration from an original status switching point, and extending a start position of a next voice segment forward 0.5*T duration from an original status switching point.

Optionally, as a different embodiment, the performing signal classification on an input signal and capturing multiple voice signal parts includes: performing, in a unit of time, segmentation on the input signal to obtain multiple input signals of the unit of time; determining, by analyzing the input signals of the unit of time, whether the input signals of the unit of time are voice signals or non-voice signals; and using an input signal, which is determined as a voice signal, of the unit of time as the voice signal part.

Optionally, as a different embodiment, the performing a voice quality evaluation on the voice segment to obtain a quality evaluation result includes: performing a non-intrusive quality evaluation on the voice segment to obtain the quality evaluation result.

In a live network, received signals are of various types. For example, in a call, when the call is connected, there are a ring back tone, that is, music, and a talking voice of a calling party; and when the calling party is silent, a mute voice with an uncertain length exists. In the prior art, a non-intrusive quality evaluation standard is mainly used for a voice, and a capability of evaluating another type, such as music, is not strong enough. Therefore, to perform uninterrupted quality monitoring in real time, an irrelevant signal needs to be removed, such as a non-voice signal, and voice signal quality is pertinently predicated, thereby achieving an accurate monitoring effect.

According to classical signal classification, a signal is generally classified into two categories: a voice and music. Although an analysis is performed frame by frame, in an actual application, stability of signal classification within a period of time is considered and frequent switching is avoided in a signal classification method. An experiment indicates that frequent mode switching has large impact on voice transmission. An extreme example is that an odd frame is determined as a voice and an even frame is determined as music. This instability not only affects encoding and transmission, but also affects implementation of quality monitoring.

Therefore, to avoid frequent mode switching, in an actual application, classification results are generally consistent within a period of time, for example, within a period of time in a unit of second.

There are many signal classification methods. As a preferred embodiment, signal classification may be performed by using a pitch feature, such as the number and distribution regularity of pitches. FIG. 2 is a schematic flowchart of a signal classification method according to Embodiment 2 of the present invention, where the method includes the following content.

S21. Perform, in a unit of time, segmentation on an input signal to obtain one or more input signals of the unit of time.

Then, it is determined, by analyzing the input signals of the unit of time, whether the input signals of the unit of time are voice signals or non-voice signals.

In this step, according to this preferred embodiment of the present invention, a pitch feature of the one or more input signals of the unit of time, such as the number and distribution regularity of pitch components, is extracted to determine whether the input signals of the unit of time are voice signals or non-voice signals.

S22. For each input signal of the unit of time, determine whether an average value of the numbers of pitch components included in each input signal of the unit of time is larger. The average value of the numbers of pitch components is compared with a threshold, if the average value of the numbers of pitch components is larger, that is, a result of the determining in S22 is "yes", S23 is performed. Otherwise, a result of the determining in S22 is "no", S24 is performed.

S23. Determine that the input signal of the unit of time is a non-voice signal.

S24. For each input signal of the unit of time, determine whether a distribution ratio of the pitch components of each input signal of the unit of time at a low frequency is smaller. The distribution ratio of the pitch components is compared with a threshold, if the distribution ratio of the pitch components at a low frequency is smaller, that is, a result of the determining in S24 is "yes", S23 is performed. Otherwise, a result of the determining in S24 is "no", S25 is performed.

S25. Determine that the input signal of the unit of time is a voice signal, and use the input signal of the unit of time as a voice signal part for subsequent processing.

In an example of the present invention, an irrelevant signal in input signals is removed, that is, a non-voice signal, so that voice quality evaluation can be pertinently performed on a voice signal, thereby achieving an accurate monitoring effect.

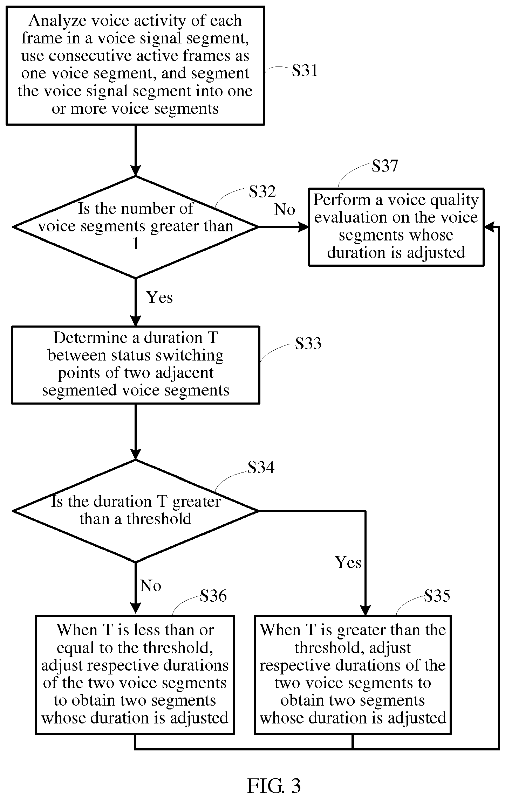

Optionally, segmentation is performed on each voice signal part to obtain one or more voice segments, where a length of each voice segment is equal to a fixed duration. However, a voice signal part that is captured from a live network after signal classification may include multiple parts. For example, a person speaks two paragraphs of phrases in 8 seconds and a pause exists between the phrases. Therefore, for a more accurate analysis, voice segment segmentation needs to be performed on a captured voice signal. A more objective quality evaluation method is that one or more voice segments are separated, and each voice segment is separately rated. Therefore, optionally, as a different embodiment, voice segment segmentation is performed on each voice signal part according to voice activity to obtain one or more voice segments, where the voice activity indicates activity of each frame of voice signal in the voice signal part. Voice quality evaluation is performed on a segment that is obtained by analyzing voice activity, so that an obtained evaluation result is more accurate. FIG. 3 is a schematic flowchart of a voice segment segmentation method according to Embodiment 3 of the present invention.

S31. Analyze voice activity of each frame in a voice signal part, use consecutive active frames as one voice segment, and segment the voice signal part into one or more voice segments.

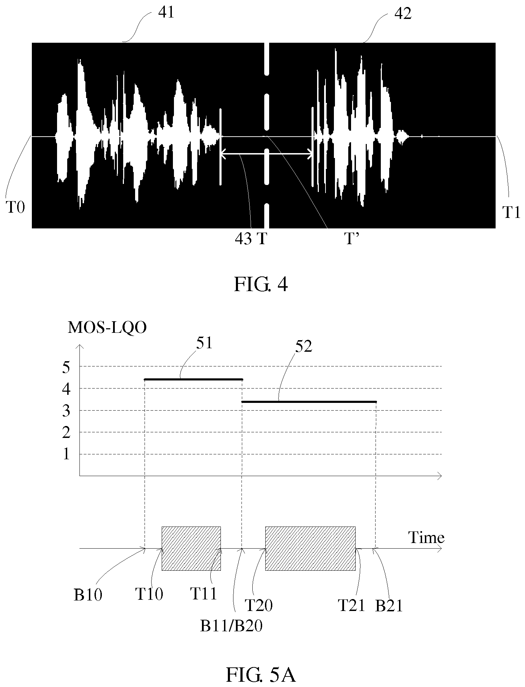

FIG. 4 is a schematic diagram of two voice segments according to Embodiment 4 of the present invention. As shown in FIG. 4, according to voice activity (Voice Activity), a voice signal part with a start-end time being [T0, T1] is segmented into two voice segments 41 and 42, whose start times are [T0, T'] and [T', T1]. A VAD (Vocie Activity Detection, voice activity detection) technology in the prior art may be used for voice segment segmentation.

The VAD detection technology for voice segment segmentation may be approximately divided into two steps:
Step 1: Identify, frame by frame, whether each frame in a voice signal part is active or non-active. According to a common method in the prior art, activity of each frame is determined by calculating information, such as energy and a frequency spectrum, of each frame and comparing the energy and the frequency spectrum of each frame with a threshold. When the energy and the frequency spectrum of each frame are less than the threshold, the frame is defined to be non-active; otherwise, the frame is defined to be active.
Step 2: In an implementation process, to avoid frequent switching from active to non-active or from non-active to active, perform smooth processing to ensure that a status within a period of time is consistent.

Therefore, when status switching occurs, a current frame is identified as a start or an end of a voice segment. Specifically, when switching from non-active to active occurs, a status switching point of the voice segment is identified as a start; and when switching from active to non-active occurs, a status switching point of the voice segment is identified as an end.

Therefore, each voice segment includes a start-to-end duration that is limited by a pair of status switching points of the voice segment, where a status of the duration is active; and a period of time before or after the duration for a smooth transition, where a status of the period of time is non-active.

S32. Determine whether the number of segmented voice segments is greater than 1. When the number of voice segments is 1, that is, a result of the determining in S32 is "yes", S37 is performed. Otherwise, a result of the determining in S32 is "no", S33 is performed.

As an implementation manner, then, a voice quality evaluation may be performed one by one on the segmented voice segments, such as 41 and 42 shown in FIG. 4, to obtain a quality evaluation result. However, this embodiment of the present invention provides a more preferable method, which is described as follows.

S33. Determine a duration T between status switching points of two adjacent segmented voice segments.

It may further be seen from FIG. 4 that a duration T between status switching points of the two voice segments 41 and 42 still exist, such as 43 in the figure, which may be a long time mute voice. A quality analysis performed on a voice segment that includes a long time mute voice causes that a voice quality monitoring result is not accurate enough. For a more accurate analysis, in this embodiment of the present invention, preferably, the duration T is compared with a threshold, and respective durations of the two voice segments is adjusted according to a comparison result to obtain the foregoing voice segments whose duration is adjusted; and a voice quality evaluation is performed on the foregoing voice segments whose duration is adjusted, to obtain a quality evaluation result.

S34. Compare the duration T with a threshold. If the duration T is greater than the threshold, that is, a result of the determining in S34 is "yes", S35 is performed. If the duration T is less than or equal to the threshold, that is, a result of the determining in S34 is "no", S36 is performed.

S35. When the duration T is greater than the threshold, extend an end position of a previous voice segment backward 0.5 multiple of the threshold from an original status switching point, and extend a start position of a next voice segment forward 0.5 multiple of the threshold from an original status switching point, to obtain two voice segments whose duration is adjusted; and then S37 is performed.

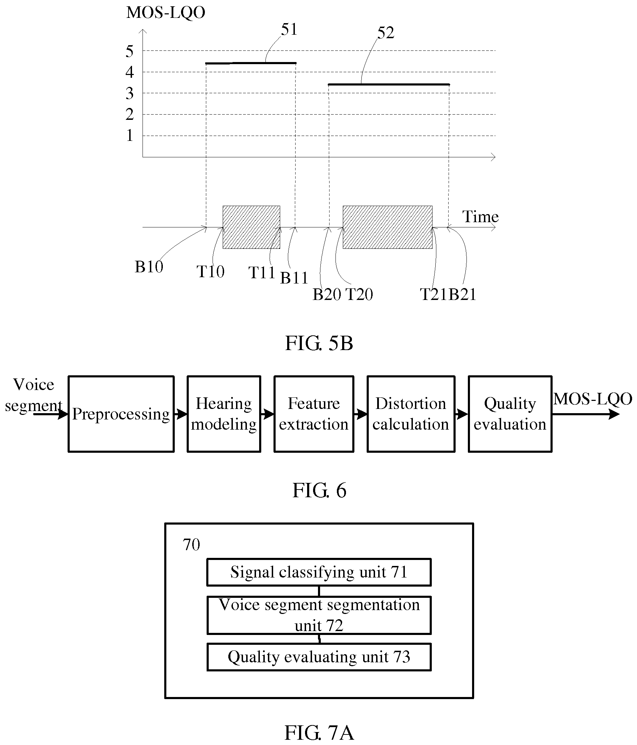

FIG. 5A and FIG. 5B are schematic diagrams of a voice segment segmentation algorithm according to Embodiment 5 of the present invention. For ease of description, B10 is equivalent to T0 in FIG. 4, B21 is equivalent to T1 in FIG. 4, and a duration [B10, B21] is a voice signal part. The voice signal part is detected by means of VAD, and it is determined that voice activity of the following durations [B10, T10], [T11, T20] and [T21, B21] are 0, that is, a status is non-active. Voice activity of durations [T10, T11] and [T20, T21] are 1, that is, a status is active.

For example, referring to FIG. 5A, after the foregoing VAD detection, two relatively independent voice segments 51 and 52 are obtained from [B10, B21], where a start-end time of the voice segment 51 is [B10, B11] and a start-end time of the voice segment 52 is [B20, B21]. When an interval between a first voice segment status switching point T11 and a second voice segment status switching point T20 is less than or equal to an empirical threshold THD, such as 450 ms, it is considered in the present invention that the foregoing two voice segments are adjacent. Therefore, a quality evaluation is separately performed on the two voice segments [B10, B11] and [B20, B21]. It should be noted that B11 and B20 are a coincident point and also are a middle point between moments T11 and T20.

S36. When the duration T is less than or equal to the threshold, extend an end position of a previous voice segment 0.5*T duration from an original status switching point, and extend a start position of a next voice segment forward 0.5*T duration from an original status switching point, to obtain two voice segments whose duration is adjusted; and then S37 is performed.

For example, referring to FIG. 5B, after the foregoing VAD detection, two relatively independent voice segments 51 and 52 are obtained from [B10, B21], where a start-end time of the voice segment 51 is [B10, B11] and a start-end time of the voice segment 52 is [B20, B21]. When an interval between a first voice segment status switching point T11 and a second voice segment status switching point T20 is greater than an empirical threshold (such as 450 ms), it is considered in the present invention that the foregoing two voice segments are not adjacent, and a long mute voice exists between the foregoing two voice segments. Performing a quality evaluation on the mute voice is meaningless. Therefore, after lengths of [T11, B11] and [B20, T20] are separately specified as 0.5*THD, a quality evaluation is separately performed on the two voice segments [B10, B11] and [B20, B21]. A voice segment between [B11, B20] is defined as an absolute mute voice segment, and a quality evaluation does not need to be performed. It should be noted that B11 and B20 are not a coincident point.

S37. Perform a voice quality evaluation on the voice segments whose duration is adjusted, to obtain a quality evaluation result.

When only one segmented voice segment exists, a voice quality evaluation is directly performed on the voice segment, to obtain a quality evaluation result. When multiple segmented voice segments exist, a voice quality evaluation is performed on a voice segment whose duration is adjusted, to obtain a quality evaluation result.

In this embodiment of the present invention, on a basis of performing voice classification on an input signal, a more objective unit, that is, a voice segment, is obtained by means of segmentation by using VAD detection to perform a quality evaluation; in addition, duration optimization is also performed on a voice segment involved in the quality evaluation, so that the quality evaluation is further accurate.

The prior art includes an intrusive quality evaluation method and a non-intrusive quality evaluation method. For a calling party, a signal before encoding is defined as a reference signal S_{Ref}. when negative impact of encoding and subsequent transmission on voice quality is considered, the S_{Ref} generally has best quality in a whole procedure. Accordingly, a signal after decoding is defined as a received signal S_{Deg}, and generally, quality of the S_{Deg} is inferior to the S_{Ref}. According to an analysis of the S_{Ref} and the S_{Deg}, a main factor of quality deterioration includes encoding, transmission, and the like. In the intrusive quality method, an intrusive evaluation is performed according to the S_{Ref} and the S_{Deg}, and a voice quality evaluation result, that is, MOS-LQO (Mean Opinion Score-Listening Quality Objectives, mean opinion score-listening quality objectives), is output. In the non-intrusive quality evaluation method, a non-intrusive evaluation is performed directly according to the S_{Deg}, and a voice quality evaluation result, that is, MOS-LQO, is output.

In a live network, generally, when a voice quality evaluation is performed on any voice segment obtained by means of voice classification and segmentation, it is very difficult to obtain a reference signal S_{Ref}. Therefore, in this embodiment of the present invention, it is suggested that a non-intrusive quality evaluation method is used to directly perform real-time quality monitoring on a distorted signal, that is, an S_{Deg}. Particularly, for a relatively long or uninterrupted input signal, a voice quality evaluation result may be output in real time by using the non-intrusive quality evaluation method. FIG. 6 is a schematic flowchart of a non-intrusive quality evaluation method according to Embodiment 6 of the present invention. The non-intrusive quality evaluation method generally includes procedures, such as preprocessing, hearing modeling, feature extraction, distortion calculation, and quality evaluation. In the non-intrusive quality evaluation method, a different technology has its own uniqueness in hearing modeling and feature extraction aspects. However, in this embodiment of the present invention, what is input is still a voice segment obtained by means of segmentation, and what is output is MOS-LQO that ranges from 1 to 5 scores and represents quality of a current voice segment. A voice segment in this embodiment of the present invention is also a received signal S_{Deg} in the non-intrusive quality evaluation method.

In conclusion, according to this embodiment of the present invention, signal classification is performed on an input signal; voice segmentation is performed on a voice signal part that is captured after the classification; and a voice quality evaluation is performed by using a segmented voice segment as a unit or a voice signal whose duration is further adjusted as a unit. Because the segmented voice segment includes only a voice signal and is shorter than the input signal, proper voice quality monitoring can be performed on a relatively long audio signal by using relatively low costs, thereby obtaining a more accurate voice quality evaluation result.

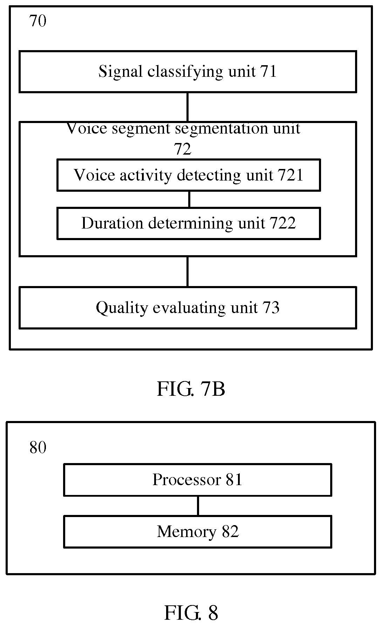

FIG. 7 is a schematic block diagram of a voice quality monitoring apparatus 70 according to Embodiment 7 of the present invention. The apparatus 70 includes: a signal classifying unit 71, a voice segment segmentation unit 72, and a quality evaluating unit 73.

The signal classifying unit 71 captures one or more voice signal parts from an input signal and sends the one or more voice signal parts to the voice segment segmentation unit.

The voice segment segmentation unit 72 performs voice segment segmentation on each voice signal part that is received from the signal classifying unit 71, to obtain one or more voice segments, and sends the one or more voice segments to the quality evaluating unit.

As a different example, optionally, the voice segment segmentation unit 72 performs the voice segment segmentation on each voice signal part according to voice activity to obtain the one or more voice segments; optionally, the voice segment segmentation unit 72 performs segmentation on each voice signal part to obtain the one or more voice segments, where a length of each voice segment is equal to a fixed duration.

The quality evaluating unit 73 performs a voice quality evaluation on the voice segment that is received from the voice segment segmentation unit 72, to obtain a quality evaluation result.

According to the voice quality monitoring method provided in this embodiment of the present invention, a voice signal part is captured from an input signal and voice segment segmentation is performed on the voice signal part; and a voice quality evaluation is performed by using a segmented voice segment as a unit. Because the segmented voice segment includes only a voice signal and is shorter than the input signal, proper voice quality monitoring can be performed on a relatively long audio signal by using relatively low costs, thereby obtaining a more accurate voice quality evaluation result.

As a different implementation manner, FIG. 7B is another schematic block diagram of the voice quality monitoring apparatus 70 according to Embodiment 7 of the present invention. A difference from the apparatus 70 shown in FIG. 7A is that the voice segment segmentation unit 72 shown in FIG. 7B includes a voice activity detecting unit 721 or the voice segment segmentation unit 72 includes a voice activity detecting unit 721 and a duration determining unit 722.

As a different embodiment, optionally, the voice activity detecting unit 721 specifically analyzes voice activity of each frame in the voice signal part, uses consecutive active frames as one voice segment, and segments the voice signal part into the one or more voice segments, where the obtained one or more voice segments are used for the voice quality evaluation.

As a different embodiment, optionally, the voice activity detecting unit 721 analyzes voice activity of each frame in the voice signal part, uses consecutive active frames as one voice segment, and segments the voice signal part into the one or more voice segments. The duration determining unit 722 determines a duration T between status switching points of two adjacent voice segments; and compares the duration T with a threshold, adjusts respective durations of the two voice segments according to a comparison result to obtain voice segments whose duration is adjusted, where the voice segments whose duration is adjusted are used as voice segments on which the voice quality evaluation is performed.

As a different embodiment, optionally, when the duration T is greater than the threshold, the duration determining unit specifically extends an end position of a previous voice segment backward 0.5 multiple of the threshold from an original status switching point, and extends a start position of a next voice segment forward 0.5 multiple of the threshold from an original status switching point; or when the duration T is less than or equal to the threshold, extends an end position of a previous voice segment 0.5*T duration from an original status switching point, and extends a start position of a next voice segment forward 0.5*T duration from an original status switching point.

As a different embodiment, optionally, the signal classifying unit specifically performs, in a unit of time, segmentation on the input signal to obtain multiple input signals of the unit of time; determines, by analyzing the input signals of the unit of time, whether the input signals of the unit of time are voice signals or non-voice signals; and uses an input signal, which is determined as a voice signal, of the unit time as the voice signal part.

As a different embodiment, optionally, the quality evaluating unit performs a non-intrusive quality evaluation on the voice segment to obtain the quality evaluation result.

The apparatus 70 may implement any voice quality monitoring method according to Embodiments 1 to 6 of the present invention. For brevity, refer to descriptions of Embodiments 1 to 6 for specific details, which are not described herein again.

According to this embodiment of the present invention, signal classification is performed on an input signal; voice segmentation is performed on a voice signal part that is captured after the classification; a voice quality evaluation is performed by using a segmented voice segment as a unit or a voice signal whose duration is further adjusted as a unit. Because the segmented voice segment includes only a voice signal and is shorter than the input signal, proper voice quality monitoring can be performed on a relatively long audio signal by using relatively low costs, thereby obtaining a more accurate voice quality evaluation result.

FIG. 8 is a schematic block diagram of a voice quality monitoring apparatus 80 according to Embodiment 8 of the present invention. The apparatus 80 includes a processor 81 and a memory 82. The processor 81 and the memory 82 are connected by using a bus.

The memory 82 is configured to store an instruction that enables the processor 81 to perform the following operations: capturing one or more voice signal parts from an input signal; performing voice segment segmentation on each voice signal part to obtain one or more voice segments; and performing a voice quality evaluation on the voice segment to obtain a quality evaluation result according to the voice quality evaluation; and the memory 82 may further be configured to store data and a result of the foregoing operations.

The processor 81 is configured to capture one or more voice signal parts from an input signal; perform voice segment segmentation on each voice signal part to obtain one or more voice segments; and perform a voice quality evaluation on the voice segment to obtain a quality evaluation result according to the voice quality evaluation.

According to the voice quality monitoring method provided in this embodiment of the present invention, classification is performed on an input signal, voice segment segmentation is further performed on the classified signal, and a quality evaluation is performed on the segmented voice segment, so that proper voice quality monitoring can be performed on a relatively long audio signal by using relatively low costs, thereby obtaining a more accurate voice quality evaluation result.

The processor 141 may also be referred to as a CPU (Central Processing Unit, central processing unit). The memory 142 may include a read-only memory and a random access memory, and provides an instruction and data for the processor 141. A part of the memory 142 may further include a nonvolatile random access memory (NVRAM).

The methods disclosed in the foregoing embodiments of the present invention may be applied to the processor 81, or implemented by the processor 81. The processor 81 may be an integrated circuit chip and has a signal processing capability. In an implementation process, the steps in the foregoing methods may be completed by using an integrated logic circuit of hardware or an instruction in a form of software in the processor 81. The foregoing processor 81 may be a general processor, a digital signal processor (DSP), an application-specific integrated circuit (ASIC), a field programmable gate array (FPGA) or another programmable logic component, a discrete gate or a transistor logic component, or a discrete hardware component. The methods, the steps, and the logical block diagrams disclosed in the embodiments of the present invention may be implemented or performed. A general processor may be a microprocessor or the processor may be any conventional processor, and the like. The steps of the methods disclosed in the embodiments of the present invention may be directly performed by a hardware decoding processor, or performed by a combination of hardware and software modules in a decoding processor. The software module may be located in a mature storage medium in the field, such as a random access memory, a flash memory, a read-only memory, a programmable read-only memory, an electrically-erasable programmable memory or a register. The storage medium is located in the memory 82. The processor 81 reads information from the memory 82, and completes the steps of the foregoing methods in combination with the hardware.

Optionally, as a different example, the processor performs the voice segment segmentation on each voice signal part according to voice activity to obtain the one or more voice segments, where the voice activity indicates activity of each frame of voice signal in the voice signal part; or performs segmentation on each voice signal part to obtain the one or more voice segments, where a length of each voice segment is equal to a fixed duration.

Optionally, as a different embodiment, the processor specifically analyzes voice activity of each frame in the voice signal part, uses consecutive active frames as one voice segment, and segments the voice signal part into the one or more voice segments.

Optionally, as a different embodiment, the processor analyzes voice activity of each frame in the voice signal part, uses consecutive active frames as one voice segment, and segments the voice signal part into the one or more voice segments; determines a duration T between status switching points of two adjacent voice segments; and compares the duration T with a threshold and adjusts respective durations of the two voice segments according to a comparison result to obtain voice segments whose duration is adjusted, where the voice segments whose duration is adjusted are used as voice segments on which the voice quality evaluation is performed.

Optionally, as a different embodiment, when the duration T is greater than the threshold, the processor extends an end position of a previous voice segment backward 0.5 multiple of the threshold from an original status switching point, and extends a start position of a next voice segment forward 0.5 multiple of the threshold from an original status switching point; or when the duration T is less than or equal to the threshold, extends an end position of a previous voice segment 0.5*T duration from an original status switching point, and extends a start position of a next voice segment forward 0.5*T duration from an original status switching point.

Optionally, as a different embodiment, the processor performs segmentation, in a unit of time, on the input signal to obtain multiple input signals of the unit of time; determines, by analyzing the input signals of the unit of time, whether the input signals of the unit of time are voice signals or non-voice signals; and uses an input signal, which is determined as a voice signal, of the unit time as the voice signal part.

Optionally, as a different embodiment, the processor performs a non-intrusive quality evaluation on the voice segment to obtain the quality evaluation result.

The apparatus 80 may implement any voice quality monitoring method according to Embodiments 1 to 6 of the present invention. For brevity, refer to descriptions of Embodiments 1 to 6 for specific details, which are not described herein again.

According to this embodiment of the present invention, signal classification is performed on an input signal; voice segmentation is performed on a voice signal part that is captured after the classification; a voice quality evaluation is performed by using a segmented voice segment as a unit or a voice signal whose duration is further adjusted as a unit. Because the segmented voice segment includes only a voice signal and is shorter than the input signal, proper voice quality monitoring can be performed on a relatively long audio signal by using relatively low costs, thereby obtaining a more accurate voice quality evaluation result.

A person of ordinary skill in the art may be aware that, in combination with the examples described in the embodiments disclosed in this specification, units and algorithm steps may be implemented by electronic hardware, computer software, or a combination thereof. Whether the functions are performed by hardware or software depends on particular applications and design constraint conditions of the technical solutions. A person skilled in the art may use different methods to implement the described functions for each particular application, but it should not be considered that such implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separate, and parts displayed as units may or may not be physical units, may be located in one position, or may be distributed on multiple network units. A part or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium and includes several instructions for instructing a computer device (which may be a personal computer, a server, or a network device) to perform all or a part of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A voice quality monitoring method, comprising:
capturing one or more voice signal parts from an input signal;
performing voice segment segmentation on each voice signal part to obtain multiple voice segments; and
performing a voice quality evaluation on the multiple voice segments to obtain a quality evaluation result according to the voice quality evaluation;
wherein the performing voice segment segmentation on each voice signal part to obtain multiple voice segments comprises:
analyzing voice activity of each frame in the voice signal part, and segmenting the voice signal part into the multiple voice segments, using consecutive active frames as one voice segment;
determining a duration T between status switching points of two adjacent voice segments, wherein a status switching point is a point where switching from non-active to active or from active to non-active occurs; and
comparing the duration T with a threshold, and adjusting respective durations of the two voice segments according to a comparison result to obtain voice segments whose duration is adjusted;
and wherein the performing a voice quality evaluation on the voice segments comprises: performing the voice quality evaluation on the voice segments whose duration is adjusted;
**characterized in that**
the comparing the duration T with a threshold and adjusting respective durations of the two voice segments according to a comparison result comprises:
when the duration T is greater than the threshold, extending an end position of a previous voice segment backward 0.5 multiple of the threshold from an original status switching point, and extending a start position of a next voice segment forward 0.5 multiple of the threshold from an original status switching point; or
when the duration T is less than or equal to the threshold, extending an end position of a previous voice segment 0.5*T duration from an original status switching point, and extending a start position of a next voice segment forward 0.5*T duration from an original status switching point.

2. The method according to claim 1, wherein capturing multiple voice signal parts comprises:
performing, in a unit of time, segmentation on the input signal to obtain multiple input signals of the unit of time;
determining, by analyzing the input signals of the unit of time, whether the input signals of the unit of time are voice signals or non-voice signals; and
using an input signal, which is determined as a voice signal, of the unit time as the voice signal part.

3. The method according to claim 1 or 2, wherein the performing a voice quality evaluation on the multiple voice segments to obtain a quality evaluation result comprises:
performing a non-intrusive quality evaluation on the multiple voice segments to obtain the quality evaluation result.

4. A voice quality monitoring apparatus (70), comprising a signal classifying unit (71), a voice segment segmentation unit (72), and a quality evaluating unit (73), wherein
the signal classifying unit is configured to capture one or more voice signal parts from an input signal and send the one or more voice signal parts to the voice segment segmentation unit;
the voice segment segmentation unit is configured to perform voice segment segmentation on each voice signal part that is received from the signal classifying unit, to obtain multiple voice segments; and send the multiple voice segments to the quality evaluating unit; and
the quality evaluating unit is configured to perform a voice quality evaluation on the multiple voice segments that is received from the voice segment segmentation unit, to obtain a quality evaluation result according to the voice quality evaluation;
wherein the voice segment segmentation unit comprises a voice activity detecting unit (721) and a duration determining unit (722), wherein
the voice activity detecting unit is configured to analyze voice activity of each frame in the voice signal part, and segment the voice signal part into the multiple voice segments using consecutive active frames as one voice segment; and
the duration determining unit is configured to determine a duration T between status switching points of two adjacent voice segments; wherein a status switching point is a point where switching from non-active to active or from active to non-active occurs; and compare the duration T with a threshold, adjust respective durations of the two voice segments according to a comparison result to obtain voice segments whose duration is adjusted, and send the voice segments whose duration is adjusted to the quality evaluating unit; and the quality evaluating unit is configured to perform the voice quality evaluation on the voice segments whose duration is adjusted by the duration determining unit, to obtain the quality evaluation result according to the voice quality evaluation;
**characterized in that** the duration determining unit is specifically configured to:
when the duration T is greater than the threshold, extend an end position of a previous voice segment backward 0.5 multiple of the threshold from an original status switching point, and extend a start position of a next voice segment forward 0.5 multiple of the threshold from an original status switching point; or
when the duration T is less than or equal to the threshold, extend an end position of a previous voice segment 0.5*T duration from an original status switching point, and extend a start position of a next voice segment forward 0.5*T duration from an original status switching point.

5. The apparatus according to claim 4, wherein the signal classifying unit is specifically configured to:
perform, in a unit of time, segmentation on the input signal to obtain multiple input signals of the unit of time;
determine, by analyzing the input signals of the unit of time, whether the input signals of the unit of time are voice signals or non-voice signals; and
use an input signal, which is determined as a voice signal, of the unit time as the voice signal part.

6. The apparatus according to claim 4 or 5, wherein:
the quality evaluating unit is configured to perform a non-intrusive quality evaluation on the multiple voice segments to obtain the quality evaluation result.

## Patentansprüche

1. Verfahren zur Überwachung von Sprachqualität, aufweisend:
Erfassen eines oder mehrerer Sprachsignalteile aus einem Eingangssignal;
Durchführen von Sprachsegmentsegmentierung an jedem Sprachsignalteil, um mehrere Sprachsegmente zu erhalten; und
Durchführen einer Sprachqualitätsbewertung an den mehreren Sprachsegmenten, um ein Qualitätsbewertungsergebnis gemäß der Sprachqualitätsbewertung zu erhalten;
wobei das Durchführen von Sprachsegmentsegmentierung an jedem Sprachsignalteil, um mehrere Sprachsegmente zu erhalten, aufweist:
Analysieren von Sprachaktivität jedes Rahmens im Sprachsignalteil und Segmentieren des Sprachsignalteils in mehrere Sprachsegmente unter Verwendung aufeinanderfolgender aktiver Rahmen als ein Sprachsegment;
Bestimmen einer Dauer T zwischen Statuswechselpunkten zweier benachbarter Sprachsegmente, wobei ein Statuswechselpunkt ein Punkt ist, an dem Wechseln von nicht aktiv zu aktiv oder von aktiv zu nicht aktiv stattfindet; und
Vergleichen der Dauer T mit einer Schwelle, und Anpassen jeweiliger Dauern der beiden Sprachsegmente gemäß einem Vergleichsergebnis, um Sprachsegmente zu erhalten, deren Dauer angepasst ist;
und wobei das Durchführen einer Sprachqualitätsbewertung an den Sprachsegmenten aufweist: Durchführen der Sprachqualitätsbewertung an den Sprachsegmenten, deren Dauer angepasst ist;
**dadurch gekennzeichnet, dass**
das Vergleichen der Dauer T mit einer Schwelle und Anpassen jeweiliger Dauern der beiden Sprachsegmente gemäß einem Vergleichsergebnis aufweist:
Erweitern einer Endposition eines vorherigen Sprachsegments um das 0,5 fache der Schwelle von einem ursprünglichen Statuswechselpunkt nach hinten, und Erweitern einer Startposition eines nächsten Sprachsegments um das 0,5 fache der Schwelle von einem ursprünglichen Statuswechselpunkt nach vorne, wenn die Dauer T über der Schwelle liegt; oder
Erweitern einer Endposition eines vorherigen Sprachsegments um eine Dauer von 0,5*T von einem ursprünglichen Statuswechselpunkt, und Erweitern einer Startposition eines nächsten Sprachsegments um eine Dauer von 0,5*T von einem ursprünglichen Statuswechselpunkt, wenn die Dauer T unter der Schwelle liegt.

2. Verfahren nach Anspruch 1, wobei das Erfassen mehrerer Sprachsignalteile aufweist:
Durchführen von Segmentierung am Eingangssignal in einer Zeiteinheit, um mehrere Eingangssignale der Zeiteinheit zu erhalten;
Bestimmen durch Analysieren der Eingangssignale der Zeiteinheit, ob die Eingangssignale der Zeiteinheit Sprachsignale oder Nicht-Sprachsignale sind; und
Verwenden eines Eingangssignals der Zeiteinheit, das als ein Sprachsignal bestimmt wird, als den Sprachsignalteil.

3. Verfahren nach Anspruch 1 oder 2, wobei das Durchführen einer Sprachqualitätsbewertung an den mehreren Sprachsegmenten, um ein Bewertungsergebnis zu erhalten, aufweist:
Durchführen einer nicht-intrusiven Qualitätsbewertung an den mehreren Sprachsegmenten, um das Qualitätsbewertungsergebnis zu erhalten.

4. Sprachqualitätsüberwachungsvorrichtung (70), aufweisend eine Signalklassifizierungseinheit (71), eine Sprachsegmentsegmentierungseinheit (72) und eine Qualitätsbewertungseinheit (73), wobei
die Signalklassifizierungseinheit zum Erfassen eines oder mehrerer Sprachsignalteile aus einem Eingangssignal und Senden des einen oder der mehreren Sprachsignalteile an die Sprachsegmentsegmentierungseinheit konfiguriert ist;
die Sprachsegmentsegmentierungseinheit so konfiguriert ist, dass sie Sprachsegmentsegmentierung an jedem Sprachsignalteil durchführt, der von der Signalklassifizierungseinheit empfangen wird, um mehrere Sprachsegmente zu erhalten, und die mehreren Sprachsegmente an die Qualitätsbewertungseinheit sendet; und
die Qualitätsbewertungseinheit so konfiguriert ist, dass sie eine Sprachqualitätsbewertung an den mehreren Sprachsegmenten durchführt, die von der Sprachsegmentsegmentierungseinheit empfangen werden, um ein Qualitätsbewertungsergebnis gemäß der Sprachqualitätsbewertung zu erhalten; wobei die Sprachsegmentsegmentierungseinheit eine Sprachaktivitätserkennungseinheit (721) und eine Dauerbestimmungseinheit (722) aufweist, wobei
die Sprachaktivitätserkennungseinheit zum Analysieren von Sprachaktivität jedes Rahmens im Sprachsignalteil und Segmentieren des Sprachsignalteils in mehrere Sprachsegmente unter Verwendung aufeinanderfolgender aktiver Rahmen als ein Sprachsegment konfiguriert ist; und
die Dauerbestimmungseinheit so konfiguriert ist, dass sie eine Dauer T zwischen Statuswechselpunkten zweier benachbarter Sprachsegmente bestimmt; wobei ein Statuswechselpunkt ein Punkt ist, an dem Wechseln von nicht aktiv zu aktiv oder von aktiv zu nicht aktiv stattfindet; und die Dauer T mit einer Schwelle vergleicht, jeweilige Dauern der beiden Sprachsegmente gemäß einem Vergleichsergebnis anpasst, um Sprachsegmente zu erhalten, deren Dauer angepasst ist, und die Sprachsegmente, deren Dauer angepasst ist, an die Qualitätsbewertungseinheit sendet; und wobei die Qualitätsbewertungseinheit so konfiguriert ist, dass sie die Sprachqualitätsbewertung an den Sprachsegmenten durchführt, deren Dauer durch die Dauerbestimmungseinheit angepasst ist, um das Qualitätsergebnis gemäß der Sprachqualitätsbewertung zu erhalten;
**dadurch gekennzeichnet, dass** die Dauerbestimmungseinheit ferner konfiguriert ist zum:
Erweitern einer Endposition eines vorherigen Sprachsegments um das 0,5 fache der Schwelle von einem ursprünglichen Statuswechselpunkt nach hinten, und Erweitern einer Startposition eines nächsten Sprachsegments um das 0,5 fache der Schwelle von einem ursprünglichen Statuswechselpunkt nach vorne, wenn die Dauer T über der Schwelle liegt; oder
Erweitern einer Endposition eines vorherigen Sprachsegments um eine Dauer von 0,5*T von einem ursprünglichen Statuswechselpunkt, und Erweitern einer Startposition eines nächsten Sprachsegments um eine Dauer von 0,5*T von einem ursprünglichen Statuswechselpunkt, wenn die Dauer T unter der Schwelle liegt.

5. Vorrichtung nach Anspruch 4, wobei die Signalklassifizierungseinheit insbesondere konfiguriert ist zum:
Durchführen von Segmentierung am Eingangssignal in einer Zeiteinheit, um mehrere Eingangssignale der Zeiteinheit zu erhalten;
Bestimmen durch Analysieren der Eingangssignale der Zeiteinheit, ob die Eingangssignale der Zeiteinheit Sprachsignale oder Nicht-Sprachsignale sind; und
Verwenden eines Eingangssignals der Zeiteinheit, das als ein Sprachsignal bestimmt wird, als den Sprachsignalteil.

6. Vorrichtung nach Anspruch 4 oder 5, wobei:
die Qualitätsbewertungseinheit, so konfiguriert ist, dass sie eine nicht-intrusive Qualitätsbewertung an den mehreren Sprachsegmenten durchführt, um das Qualitätsbewertungsergebnis zu erhalten.

## Revendications

1. Procédé de surveillance de la qualité vocale, consistant :
à capturer une ou plusieurs parties de signal vocal à partir d'un signal d'entrée ;
à effectuer une segmentation de segment vocal sur chaque partie de signal vocal pour obtenir de multiples segments vocaux ; et
à effectuer une évaluation de la qualité vocale sur les multiples segments vocaux pour obtenir un résultat d'évaluation de la qualité en fonction de l'évaluation de la qualité vocale ;
dans lequel la réalisation de la segmentation de segment vocal sur chaque partie de signal vocal pour obtenir de multiples segments vocaux consiste :
à analyser l'activité vocale de chaque trame dans la partie de signal vocal et à segmenter la partie de signal vocal en multiples segments vocaux à l'aide de trames actives consécutives sous la forme d'un seul segment vocal ;
à déterminer une durée T entre des points de changement d'état de deux segments vocaux adjacents, dans lequel un point de changement d'état est un point où un changement de non actif à actif ou d'actif à non actif se produit ; et
à comparer la durée T avec un seuil et à ajuster des durées respectives des deux segments vocaux en fonction d'un résultat de comparaison pour obtenir des segments vocaux dont la durée est ajustée ;
et dans lequel la réalisation d'une évaluation de la qualité vocale sur les segments vocaux consiste : à réaliser l'évaluation de la qualité vocale sur les segments vocaux dont la durée est ajustée ;
**caractérisé en ce que**
la comparaison de la durée T avec un seuil et l'ajustement des durées respectives des deux segments vocaux en fonction d'un résultat de comparaison consistent :
lorsque la durée T est supérieure au seuil, à étendre une position de fin d'un précédent segment vocal vers l'arrière d'un multiple de 0,5 du seuil à partir d'un point de changement d'état d'origine et à étendre une position de début d'un prochain segment vocal vers l'avant d'un multiple de 0,5 du seuil à partir d'un point de changement d'état d'origine ; ou
lorsque la durée T est inférieure ou égale au seuil, à étendre une position de fin d'un précédent segment vocal d'une durée 0,5*T à partir d'un point de changement d'état d'origine et à étendre une position de début d'un prochain segment vocal vers l'avant d'une durée 0,5*T à partir d'un point de changement d'état d'origine.

2. Procédé selon la revendication 1, dans lequel la capture de multiples parties de signal vocal consiste ;
à effectuer, dans une unité de temps, une segmentation sur le signal d'entrée pour obtenir de multiples signaux d'entrée de l'unité de temps ;
à déterminer, en analysant les signaux d'entrée de l'unité de temps, si les signaux d'entrée de l'unité de temps sont des signaux vocaux ou des signaux non vocaux ; et à utiliser un signal d'entrée, qui est déterminé comme étant un signal vocal, de l'unité de temps comme partie de signal vocal.

3. Procédé selon la revendication 1 ou 2, dans lequel la réalisation d'une évaluation de la qualité vocale sur les multiples segments vocaux pour obtenir un résultat d'évaluation de la qualité consiste :
à effectuer une évaluation non intrusive de la qualité sur les multiples segments vocaux pour obtenir le résultat d'évaluation de la qualité.

4. Appareil de surveillance de la qualité vocale (70), comprenant une unité de classification de signal (71), une unité de segmentation de segment vocal (72) et une unité d'évaluation de la qualité (73), dans lequel
l'unité de classification de signal est configurée pour capturer une ou plusieurs parties de signal vocal à partir d'un signal d'entrée et pour envoyer la ou les parties de signal vocal à l'unité de segmentation de segment vocal ;
l'unité de segmentation de segment vocal est configurée pour effectuer une segmentation de segment vocal sur chaque partie de signal vocal qui est reçue de l'unité de classification de signal, pour obtenir de multiples segments vocaux ; et pour envoyer les multiples segments vocaux à l'unité d'évaluation de la qualité ; et l'unité d'évaluation de la qualité est configurée pour effectuer une évaluation de la qualité vocale sur les multiples segments vocaux qui est reçue de l'unité de segmentation de segment vocal, pour obtenir un résultat d'évaluation de la qualité en fonction de l'évaluation de la qualité vocale ;
dans lequel l'unité de segmentation de segment vocal comprend une unité de détection d'activité vocale (721) et une unité de détermination de durée (722), dans lequel
l'unité de détection d'activité vocale est configurée pour analyser l'activité vocale de chaque trame dans la partie de signal vocal et pour segmenter la partie de signal vocal en multiples segments vocaux à l'aide de trames actives consécutives sous la forme d'un seul segment vocal ; et
l'unité de détermination de durée est configurée pour déterminer une durée T entre des points de changement d'état de deux segments vocaux adjacents ; dans lequel un point de changement d'état est un point où un changement de non actif à actif ou d'actif à non actif se produit ; et pour comparer la durée T avec un seuil, pour ajuster des durées respectives des deux segments vocaux en fonction d'un résultat de comparaison pour obtenir des segments vocaux dont la durée est ajustée et pour envoyer les segments vocaux dont la durée est ajustée à l'unité d'évaluation de la qualité ; et l'unité d'évaluation de la qualité est configurée pour effectuer l'évaluation de la qualité vocale sur les segments vocaux dont la durée est ajustée par l'unité de détermination de durée, pour obtenir le résultat d'évaluation de la qualité en fonction de l'évaluation de la qualité vocale ;
**caractérisé en ce que** l'unité de détermination de durée est spécialement configurée :
lorsque la durée T est supérieure au seuil, pour étendre une position de fin d'un précédent segment vocal vers l'arrière d'un multiple de 0,5 du seuil à partir d'un point de changement d'état d'origine et pour étendre une position de début d'un prochain segment vocal vers l'avant d'un multiple de 0,5 du seuil à partir d'un point de changement d'état d'origine ; ou
lorsque la durée T est inférieure ou égale au seuil, pour étendre une position de fin d'un précédent segment vocal d'une durée 0,5*T à partir d'un point de changement d'état d'origine et pour étendre une position de début d'un prochain segment vocal vers l'avant d'une durée 0,5*T à partir d'un point de changement d'état d'origine.

5. Appareil selon la revendication 4, dans lequel l'unité de classification de signal est spécialement configurée :
pour effectuer, dans une unité de temps, une segmentation sur le signal d'entrée pour obtenir de multiples signaux d'entrée de l'unité de temps ;
pour déterminer, en analysant les signaux d'entrée de l'unité de temps, si les signaux d'entrée de l'unité de temps sont des signaux vocaux ou des signaux non vocaux ; et
pour utiliser un signal d'entrée, qui est déterminé comme étant un signal vocal, de l'unité de temps comme partie de signal vocal.

6. Appareil selon la revendication 4 ou 5, dans lequel :
l'unité d'évaluation de la qualité est configurée pour effectuer une évaluation non intrusive de la qualité sur les multiples segments vocaux pour obtenir le résultat d'évaluation de la qualité.
